# EUROPÄISCHE PATENTSCHRIFT

(11) **EP 2 831 453 B1**
(45) Veröffentlichungstag und Bekanntmachung des Hinweises auf die Patenterteilung: **31.05.2017**
(21) Anmeldenummer: 13713810.3
(22) Anmeldetag: 22.03.2013
(51) Int. Cl.: F16D 55/2265, F16D 55/227

(54) **SCHEIBENBREMSE, INSBESONDERE FÜR EIN NUTZFAHRZEUG**
DISK BRAKE, IN PARTICULAR FOR A UTILITY VEHICLE
FREIN À DISQUE, EN PARTICULIER POUR UN VÉHICULE UTILITAIRE

(30) Priorität: 26.03.2012 DE 102012006133
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: BAUMGARTNER, Johann, 85368 Moosburg (DE); WERTH, Alexander, 80999 München (DE); KIELBASA, Rudolf, 85757 Karlsfeld (DE); WEGGARTNER, Robert, 84347 Pfarrkirchen (DE); FISCHL, Tobias, 94474 Vilshofen (DE)
(86) Internationale Anmeldenummer: PCT/EP2013/056007
(87) Internationale Veröffentlichungsnummer: WO 2013/143980

(56) Entgegenhaltungen:
- DE-A1-102007 008 728
- US-A- 4 480 724

## Beschreibung

Die Erfindung betrifft eine Scheibenbremse, insbesondere für ein Nutzfahrzeug, nach dem Oberbegriff des Anspruchs 1.

Bei derartigen Scheibenbremsen wie sie in der DE 10 2007 008 728 A1 offenbart sind und die auch unter dem Begriff Schiebesattel-Scheibenbremsen bekannt sind, wird der Bremssattel durch Befestigungselemente an einem fahrzeugseitigen Bremsträger oder einem vergleichbaren achsfesten Bauteil angeschlossen.

Dabei sind die Führungsholme durch Verschrauben mit dem Bremsträger verbunden und in Gleitlagern des Bremssattels so geführt, dass eine axiale Verschiebung des Bremssattels gegenüber dem ortsfesten Bremsträger möglich ist. Während eines der Gleitlager als Festlager mit geringem Gleitspiel ausgebildet ist, fungiert das andere als Loslager, wodurch insbesondere Fertigungstoleranzen ausgeglichen werden.

Neben dem Führungsholm umfasst das Festlager eine fest in den Bremssattel eingepresste Gleitbuchse, vorzugsweise aus Messing, die zusammen mit dem Bremssattel gleitend auf dem Führungsholm geführt ist.

Aufgrund des hohen Gewichtes des Bremssattels sowie auftretender hoher Vibrationsbeanspruchungen, die in vielen Anwendungsfällen als Folge schlechter Straßenverhältnisse auftreten, unterliegen die Gleitlager einem erhöhten Verschleiß, mit der Folge eines häufigen Austauschs der relevanten Bauteile. Dazu zählen insbesondere der Führungsholm sowie die Gleitbuchse.

Allerdings ist ein solcher Austausch mit einem erheblichen Arbeitsaufwand verbunden, da alle Einzelteile in separaten Arbeitsschritten demontiert und wieder montiert werden müssen.

So muss eine äußere, in eine die Gleitbuchse aufnehmende Aufnahmebohrung des Bremssattels eingepresste Verschlusskappe ausgestemmt werden, die Verschraubung des Führungsholms mit dem Bremsträger gelöst und gegebenenfalls der fest sitzende Führungsholm ausgepresst werden, ebenso wie die Gleitbuchse. Das dem Bremsträger zugewandt liegende Dichtelement, üblicherweise ein Faltenbalg, der dort ebenfalls mit dem Bremssattel verbunden ist, muss durch Zerstören entfernt werden, wobei dies nur von der Innenseite des Bremssattels her möglich ist.

Zur Montage des neuen Gleitlagers wird eine neue Gleitbuchse eingepresst, der Führungsholm montiert und ebenso wie die Gleitbuchse nach Anleitung gefettet. Ein neuer Faltenbalg ist einzupressen und an den Führungsholm anzuknüpfen. Daneben ist ein Wärmeschutzring zu montieren und der Führungsholm mit dem Bremsträger zu verschrauben. Schließlich ist eine äußere Verschlusskappe in den Bremssattel einzufügen.

Diese Arbeiten sind sehr zeitaufwändig und teuer und stehen den ständigen Bemühungen einer Kostenreduzierung entgegen. Darüber hinaus besteht die Gefahr eines fehlerhaften Einbaus, sowie eines nicht korrekten Sitzes des Faltenbalges oder von Beschädigungen und ungenügender Befettung der genannten Teile. Vielfach hat sich schon herausgestellt, dass wegen des erheblichen, insbesondere zeitlichen Aufwands des Austauschs, auf den Ersatz der Gleitbuchse verzichtet wurde, so dass in diesen Fällen nach einer Reparatur kein vollwertiger Zustand des Führungssystems hergestellt ist.

Eine Scheibenbremse, bei der die Gleitlager ohne Dichtelemente ausgebildet sind, ist aus der US 4 480 724 A bekannt. Das Gleitlager besteht dabei aus einem Führungsholm, mit einem Gewindeschaft, der in einen Bremsträger eingeschraubt ist, einer Stützhülse aus einem gummiartigen Material, in dem der Führungsholm gelagert ist, sowie einer die Stützhülse umhüllenden Führungshülse aus Nylon oder einem ähnlichen Material, wobei dieses Gleitlager axial verschiebbar in einem sattelartigen Gehäuse gehalten ist. Die axiale Sicherung der Stützhülse und der Führungshülse erfolgt durch Formschluss, wozu an die Führungshülse Laschen angeformt sind, die in Nuten des Führungsholms eingreifen.

Der Erfindung liegt die Aufgabe zugrunde, eine Scheibenbremse der gattungsgemäßen Art so weiterzuentwickeln, dass mit geringem Zeitaufwand ein einfacherer fehlerfreier Austausch der Verschleißteile möglich ist.

Diese Aufgabe wird durch eine Scheibenbremse mit den Merkmalen des Anspruchs 1 gelöst.

Prinzipiell besteht der Montageaufwand für das das neue Gleitlager lediglich darin, die bevorzugt aus Stahl bestehende, die Gleitbuchse umhüllende Mantelhülse mit dem darin gelagerten Führungsholm und dem als Rollbalg ausgebildeten Dichtelement in die Aufnahmebohrung des Bremssattels einzutreiben, so dass die Hülse und damit die gesamte Baueinheit reibschlüssig im Bremssattel gehalten ist.

Der Rollbalg ist einerseits formschlüssig am Führungsholm befestigt und andererseits im zugeordneten Endbereich der Gleitbuchse, wobei er in seinem Außendurchmesser etwa dem lichten Durchmesser der Aufnahmebohrung des Bremssattels entspricht, so dass die Baueinheit mit dem Rollbalg voraus in die Aufnahmebohrung eingesteckt bzw. eingetrieben werden kann.

Bevorzugt besteht die Mantelhülse aus Stahl und zwar wegen der einzuhaltenden engen Toleranzen als Tiefziehteil ausgebildet, wobei dann endseitig ein Kragen angeformt ist zur Einschubbegrenzung beim Eintreiben der Mantelhülse. Denkbar ist jedoch auch, die Mantelhülse aus einem Rohrabschnitt, vorzugsweise einem Präzisionsrohr herzustellen.

Die Befestigung des Führungsholms am Bremsträger erfolgt in an sich bekannter Weise mittels einer Kopfschraube, mit einer Werkzeugaufnahme. Diese Kopfschraube kann nach einem Austausch des Gleitlagers wiederverwendet werden.

Dies gilt gleichermaßen für eine Verschlusskappe, die reib- oder formschlüssig mit dem Bremssattel, der Mantelhülse oder dem Führungsholm verbunden ist.

Nach einem weiteren Gedanken der Erfindung kann die aus vorzugsweise Messing bestehende Gleitbuchse aus zwei Abschnitten gebildet sein, die in den sich gegenüberliegenden Endbereichen der Mantelhülse gelagert sind, wobei diese hierzu Freischnitte aufweist.

Die Demontage der mit den Funktionsteilen Gleitbuchse/Führungsholm/Rollbalg in einer Vormontage bestückte Mantelhülse erfolgt lediglich dadurch, dass die Verschlusskappe entfernt, die Kopfschraube, mit der der Führungsholm am Bremsträger befestigt ist, gelöst und herausgedreht und anschließend die komplette Einheit, einschließlich der Mantelhülse, ausgepresst wird und zwar vorzugsweise vom Innenraum des Bremssattels nach außen.

Neben der Kopfschraube kann bei entsprechender Konfiguration auch die Verschlusskappe bei einer folgenden Montage eines neuen Einsatzes wiederverwendet werden, was ebenso zur Kostenreduzierung beiträgt, wie der Austausch der Gleitlager-Funktionsteile. Letzteres aufgrund der erheblich verkürzten Montage- bzw. Demontagezeiten.

Darüber hinaus bietet die Erfindung auch eine Verbesserung der Reparatursicherheit, da ein Verzicht auf den Austausch funktionsrelevanter Teile, wie das zum Stand der Technik geschilderte Unterbleiben des Austauschs der Gleitbuchse, praktisch nicht möglich ist.

Während beim Festlager eine Gleitbuchse aus einem Buntmetall, vorzugsweise aus Messing, zum Einsatz kommt, weist das Loslager zum Toleranzausgleich üblicherweise eine radial elastische Gleitbuchse auf, beispielsweise aus einem Elastomer.

Dabei kann die Baulänge dieser Gleitbuchse kürzer sein als die des Festlagers, woraus sich ein längerer Bereich ergibt, mit dem der Führungsholm auf seiner dem Bremsträger gegenüberliegenden Seite aus dem Bremssattel herausragt.

Um auch hier eine ausreichende Abdichtung zu erhalten, ist ebenfalls ein Rollbalg vorgesehen, der den sozusagen frei liegenden Schaft des Führungsholms überdeckt und zwischen der Mantelhülse und dem Führungsholm eingeklemmt gehalten ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: ein Festlager einer erfindungsgemäßen Scheibenbremse in einer geschnittenen Seitenansicht
- Figur 2: ein Loslager der Scheibenbremse, gleichfalls in einer geschnittenen Seitenansicht.

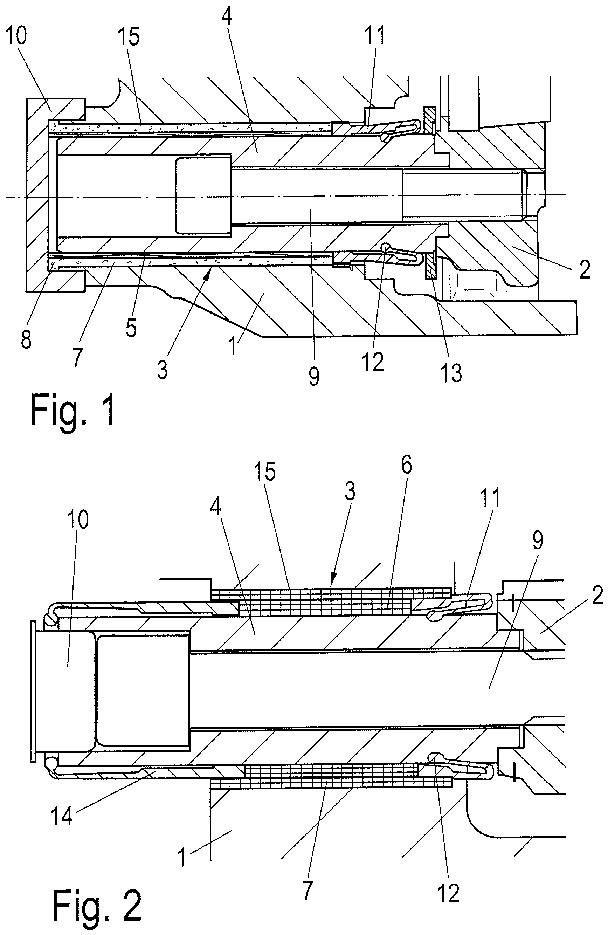

In den Figuren ist ein Festlager (Figur 1) sowie ein Loslager (Figur 2) als Befestigungselemente für einen Bremssattel 1 an einem fahrzeugseitigen, also ortsfesten Bremsträger 2 dargestellt, über die der Bremssattel 1 bei einer Bremsung in Richtung einer nicht gezeigten Bremsscheibe verschiebbar ist.

Sowohl das Festlager wie auch das Loslager sind als Gleitlager 3 ausgebildet mit einer mit dem Bremsträger 2 fest verbundenen Führungshülse 4, die in einer am Bremssattel 1 verschiebegesichert positionierten Gleitbuchse 5, 6 geführt sind.

Dabei besteht die Gleitbuchse 5 des Festlagers aus einem Gleitlagermetall, vorzugsweise Messing, während die Gleitbuchse 6 des Loslagers aus einem Elastomer oder einem vergleichbaren Material besteht, um radiale Toleranzen auszugleichen.

Der jeweilige Führungsholm 4 ist mit einer eingeführten, in den Bremsträger 2 eingeschraubten Kopfschraube 9 befestigt und weist an seinem dem Bremsträger 2 zugewandten Endbereich einen Rollbalg 11 auf, der zur dichtenden Anlage einerseits mit einem umfänglichen Ringwulst 12 formschlüssig und verschiebegesichert im Führungsholm 4 gelagert ist und andererseits an der Gleitbuchse 5, 6 befestigt ist, so dass die Dichtwirkung des Rollbalgs 11 bei einer axialen Relativbewegung des Führungsholms 4 zur Gleitbuchse 5, 6 hin erhalten bleibt. Im Übrigen wird sichergestellt, dass bei einer Beschädigung des Rollbalges der innen liegende Bereich des Gleitlagers nicht der Korrosion ausgesetzt ist und die Führung bis zum nächsten Service intakt bleibt.

Erfindungsgemäß ist das Gleitlager 3 mit dem Führungsholm 4 und der Gleitbuchse 5, 6 in einer Mantelhülse 7 gelagert und in eine Aufnahmebohrung 15 des Bremssattels 1 eingepresst, wobei die Mantelhülse 7 aus einem einen Kraftschluss ermöglichenden Material besteht, vorzugsweise aus Metall, insbesondere aus Stahl.

Zu der Baueinheit gehört der Rollbalg 11, der in seinem Außendurchmesser so dimensioniert ist, dass er behinderungsfrei durch die Aufnahmebohrung 15 geschoben werden kann. Anstelle des Rollbalges 11 kann auch ein Faltenbalg zum Einsatz kommen.

Bei dem in der Figur 1 gezeigten Festlager weist die Mantelhülse 7 auf ihrer dem Rollbalg 11 abgewandten Seite einen radial nach außen vorstehenden umlaufenden Kragen 8 auf, der als Anschlag dient beim Eintreiben der Baueinheit in die Aufnahmebohrung 15.

Da das Gleitlager 3 des Loslagers in Figur 2 kürzer dimensioniert ist als das des Festlagers in Figur 1, steht beim Loslager der Führungsholm 4 über den Bremssattel 1 vor. Um das Eindringen von Schmutz oder Feuchtigkeit auch in diesem Bereich zu verhindern, ist hier gleichfalls ein Rollbalg 14 vorgesehen, der bis in den Bereich der Gleitbuchse 6 reicht und dort klemmend gehalten ist. Dabei kann der Rollbalg 14 ebenfalls Bestandteil der vormontierten Baueinheit sein.

Nach einem Festschrauben dieser Baueinheit im Bremsträger 2 wird die freie Stirnseite des Führungsholms 4 mit einem Verschlussdeckel 10 abgedeckt, der bei dem Festlager nach Figur 1 auf ein dazu ausgebildetes Auge des Bremssattels 1 aufgepresst oder damit verschraubt ist, während die Verschlusskappe 10 bei dem Loslager in eine Axialbohrung des Führungsholms 4 eingesteckt und dort vorzugsweise kraftschlüssig gehalten ist. Der Rollbalg 14 ist dabei so um die Stirnfläche des Führungsholms 4 geführt, dass er gemeinsam mit der Verschlusskappe 10 eine vollflächige Abdeckung bildet.

Um die Baueinheit, insbesondere den dem Bremsträger 2 zugewandten Rollbalg 11 vor der beim Bremsen entstehenden Reibungswärme zu schützen, ist am Führungsholm 4 des Festlagers ein Hitzeschild in Form eines Schutzringes 13 gehalten. Wenngleich nicht dargestellt, so ist ein solcher Schutzring 13 auch bei dem Loslager nach Figur 2 einsetzbar.

### Bezugszeichenliste

- 1: Bremssattel
- 2: Bremsträger
- 3: Gleitlager
- 4: Führungsholm
- 5: Gleitbuchse
- 6: Gleitbuchse
- 7: Mantelhülse
- 8: Kragen
- 9: Kopfschraube
- 10: Verschlusskappe
- 11: Rollbalg
- 12: Ringwulst
- 13: Schutzring
- 14: Rollbalg
- 15: Aufnahmebohrung

## Patentansprüche

1. Scheibenbremse, insbesondere für ein Nutzfahrzeug, mit einem eine Bremsscheibe umfassenden Bremssattel (1), der an einem Bremsträger (2) durch zwei Befestigungselemente, bezogen auf die Bremsscheibe, axial verschiebbar befestigt ist, wobei ein Befestigungselement als Fest- und das andere als Loslager gestaltet ist und jeweils ein Gleitlager (3) bilden, bestehend aus einer Gleitbuchse (5, 6) und einem darin geführten, mit dem Bremsträger (2) fest verbundenen Führungsholm (4), an dem zur Abdichtung des dem Bremsträger (2) zugeordneten Austrittsbereichs ein am Führungsholm (4) abstützendes formbares Dichtelement angeordnet ist, **dadurch gekennzeichnet, dass** jedes Gleitlager (3) in einer Mantelhülse (7) gehalten ist und damit sowie dem Dichtelement, das als Rollbalg (11) oder Faltenbalg ausgebildet ist, der verschiebegesichert und dichtend einerseits am Führungsholm (4) und andererseits an einer Mantelhülse (7) oder der Gleitbuchse (5) befestigt ist, als vormontierte Baueinheit in eine Aufnahmebohrung (15) des Bremssattels (1) eingepresst ist.

2. Scheibenbremse nach Anspruch 1, **dadurch gekennzeichnet, dass** die Mantelhülse (7) aus einem Metall, vorzugsweise Stahl besteht.

3. Scheibenbremse nach Anspruch 1, **dadurch gekennzeichnet, dass** der Rollbalg (11) einen umlaufenden Ringwulst (12) aufweist, der in einer Ringnut des Führungsholms (4) gehalten ist.

4. Scheibenbremse nach einem der vorhergehenden Ansprüche, **dadurch gekennzeichnet, dass** die Mantelhülse (7) auf ihrer dem Bremsträger (2) abgewandten Seite einen sich radial nach außen erstreckenden umlaufenden Kragen (8) aufweist, zur Anlage am Bremssattel (1).

5. Scheibenbremse nach einem der vorhergehenden Ansprüche, **dadurch gekennzeichnet, dass** die Mantelhülse (7) als Tiefziehteil ausgebildet ist.

6. Scheibenbremse nach einem der vorhergehenden Ansprüche, **dadurch gekennzeichnet, dass** zwischen dem Rollbalg (11) und dem Bremsträger (2) am Führungsholm (4) ein Schutzring (13) angeordnet ist.

7. Scheibenbremse nach einem der vorhergehenden Ansprüche, **dadurch gekennzeichnet, dass** ein auf der dem Bremsträger (2) gegenüberliegenden Seite aus dem Bremssattel (1) ragender Endbereich des Führungsholms (4) von einem Dichtelement, vorzugsweise einem zweiten (14) überdeckt ist.

8. Scheibenbremse nach Anspruch 1 oder 3, **dadurch gekennzeichnet, dass** der größte Durchmesser des Rollbalgs (11) gleich oder kleiner dem Durchmesser der Aufnahmebohrung (15) ist.

9. Scheibenbremse nach einem der vorhergehenden Ansprüche, **dadurch gekennzeichnet, dass** an der dem Bremsträger (2) gegenüberliegenden Seite der Führungsholm (4) oder die Baueinheit durch eine Verschlusskappe (10) überdeckt ist.

10. Scheibenbremse nach Anspruch 9, **dadurch gekennzeichnet, dass** die Verschlusskappe (10) mit dem Bremssattel (1) verbunden ist oder in eine Innenbohrung des Führungsholms (4) eingesteckt und dort gehalten ist.

## Claims

1. Disc brake, in particular for a commercial vehicle, comprising a brake calliper (1), which encompasses a brake disc and is mounted, in an axially displaceable manner relative to the brake disc, on an adapter (2) by means of two fastening elements, of which one is designed as a fixed bearing and the other is designed as a floating bearing, each forming a plain bearing (3) comprising a sliding bushing (5, 6) and a guide tube (4) guided therein, which is permanently joined to the adapter (2) and on which is located a formable sealing element supported on the guide tube (4) for sealing the exit region assigned to the adapter (2), **characterised in that** each plain bearing (3) is held in a sheathing sleeve (7) and is therewith and with the sealing element, which is designed as an air sleeve (11) or bellows and secured, non-displaceably and while forming a seal, on the one hand on the guide tube (4) and on the other hand on a sheathing sleeve (7) or the sliding bushing (5), pressed into a reception bore (15) of the brake calliper (1) as a pre-assembled unit.

2. Disc brake according to claim 1, **characterised in that** the sheathing sleeve (7) is made of a metal, preferably steel.

3. Disc brake according to claim 1, **characterised in that** the air sleeve (11) has a continuous annular bead (12), which is held in an annular groove of the guide tube (4).

4. Disc brake according to any of the preceding claims, **characterised in that** the sheathing sleeve (7) has, on the side remote from the adapter (2), a continuous, radially outward-oriented collar (8) for contact with the brake calliper (1).

5. Disc brake according to any of the preceding claims, **characterised in that** the sheathing sleeve (7) is designed as a deep-drawn component.

6. Disc brake according to any of the preceding claims, **characterised in that** a protective ring (13) is mounted on the guide tube (4) between the air sleeve (11) and the adapter (2).

7. Disc brake according to any of the preceding claims, **characterised in that** an end region of the guide tube (4) projecting from the brake calliper (1) on the side opposite the adapter (2) is covered by a sealing element, preferably by a second element (14).

8. Disc brake according to claim 1 or 3, **characterised in that** the maximum diameter of the air sleeve (11) is equal to or smaller than the diameter of the reception bore (15).

9. Disc brake according to any of the preceding claims, **characterised in that** the unit is covered by a cap (10) on the side of the guide tube (4) which is opposite the adapter (2).

10. Disc brake according to claim 9, **characterised in that** the cap (10) is joined to the brake calliper (1) or inserted into and held in an internal bore of the guide tube (4).

## Revendications

1. Frein à disque, notamment pour un véhicule utilitaire, comprenant un étrier (1) de frein, qui comprend un disque de frein et qui est fixé à coulissement axial, rapporté au disque de frein, sur un porte-frein (2) par deux éléments de fixation, un élément de fixation étant conformé en palier fixe et l'autre en palier libre et formant respectivement un palier (3) lisse, constitué d'un manchon (5, 6) de glissement et d'un longeron (4) de guidage, qui y est guidé, qui est relié fixement au porte-frein (2) et sur lequel est monté, pour l'étanchéité de la région de sortie associée au porte-frein (2), un élément d'étanchéité déformable, s'appuyant sur le longeron (4) de guidage, **caractérisé en ce que** chaque palier (3) lisse est maintenu dans une douille (7) enveloppe et ainsi, ainsi que l'élément d'étanchéité qui est constitué sous la forme d'un soufflet (11) roulant ou d'un soufflet à plis, qui est fixé, sans pouvoir coulisser et d'une manière étanche, d'une part au longeron (4) de guidage et d'autre part à une douille (7) enveloppe ou un manchon (5) de glissement, estenfoncé en tant qu'unité de construction prémontée dans un trou (5) de réception de l'étrier (1) de frein.

2. Frein à disque suivant la revendication 1, **caractérisé en ce que** la douille (7) enveloppe est en métal, de préférence en acier.

3. Frein à disque suivant la revendication 1, **caractérisé en ce que** le soufflet (11) roulant a un bourrelet (12) annulaire faisant le tour, qui est maintenu dans une rainure annulaire du longeron (4) de guidage.

4. Frein à disque suivant l'une des revendications précédentes, **caractérisé en ce que** la douille (7) enveloppe a, sur son côté éloigné du porte-frein (2), un collet (8) faisant le tour et s'étendant radialement vers l'extérieur pour l'application à l'étrier (1) de frein.

5. Frein à disque suivant l'une des revendications précédentes, **caractérisé en ce que** la douille (7) enveloppe est constituée sous la forme d'une pièce à emboutissage profond.

6. Frein à disque suivant l'une des revendications précédentes, **caractérisé en ce qu'**une bague (13) de protection est disposée entre le soufflet (11) roulant et le porte-frein (2) sur le longeron (4) de guidage.

7. Frein à disque suivant l'une des revendications précédentes, **caractérisé en ce qu'**une partie d'extrémité, dépassant de l'étrier (1) de frein du côté opposé au porte-frein (2), du longeron (4) de guidage est recouverte d'un élément d'étanchéité, de préférence d'un deuxième (14).

8. Frein à disque suivant la revendication 1 ou 3, **caractérisé en ce que** le diamètre le plus grand du soufflet (11) roulant est inférieur ou égal au diamètre du trou (15) de réception.

9. Frein à disque suivant l'une des revendications précédentes, **caractérisé en ce que**, du côté opposé au porte-frein (2), le longeron (4) de guidage ou l'unité de construction est recouvert d'une coiffe (10) de fermeture.

10. Frein à disque suivant la revendication 9, **caractérisé en ce que** la coiffe (10) de fermeture est reliée à l'étrier (1) de frein ou est enfichée dans un trou intérieur du longeron (4) de guidage et y est maintenue.
